(19) **Europäisches Patentamt**
**European Patent Office**
**Office européen des brevets**

(11) **EP 2 221 174 A1**

(12) **EUROPEAN PATENT APPLICATION**
published in accordance with Art. 153(4) EPC

(43) Date of publication:
**25.08.2010 Bulletin 2010/34**

(51) Int Cl.:
***B32B 27/20*** (2006.01)

(21) Application number: **08854724.5**

(22) Date of filing: **11.11.2008**

(86) International application number:
**PCT/JP2008/070834**

(87) International publication number:
**WO 2009/069486 (04.06.2009 Gazette 2009/23)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.11.2007 JP 2007309900**

(71) Applicant: **Nitto Denko Corporation Ibaraki-shi, Osaka 567-8680 (JP)**

(72) Inventors:
• **NAGASAKI, Kunio**
**Ibaraki-shi**
**Osaka 567-8680 (JP)**
• **SUGINO, Yusuke**
**Ibaraki-shi**
**Osaka 567-8680 (JP)**
• **DOI, Kohei**
**Ibaraki-shi**
**Osaka 567-8680 (JP)**

(74) Representative: **Grünecker, Kinkeldey, Stockmair & Schwanhäusser Anwaltssozietät Leopoldstrasse 4 80802 München (DE)**

(54) **GAS BARREIR MEMBER WITH POLYMER LAYER CONTAINING LOCALIZED GAS-BARRIER SUBSTANCE AND PROCESS FOR PRODUCING THE GAS-BARRIER MEMBER**

(57)    Provided is a gas barrier article which exerts gas barrier properties by the action of a gas barrier material contained in a small content.

The gas barrier article is an article having a multilayer structure including a polymer layer and a monomer-absorptive layer capable of absorbing at least one of monomer component(s) constituting the polymer, in which the polymer layer is a polymer layer containing the gas barrier material unevenly distributed in the layer and enriched at an interface, or in the vicinity thereof, opposite to the monomer-absorptive layer. The gas barrier article may further include a cover film on an opposite side of the polymer layer opposite to the monomer-absorptive layer. The vicinity of the interface opposite to the monomer-absorptive layer is preferably a region ranging from the interface opposite to the monomer-absorptive layer and occupying, in a thickness direction, 50% or less of the total thickness.

Fig.1

**Description**

Technical Field

The present invention relates to a gas barrier article having a polymer layer containing an unevenly distributed gas barrier material, and to a process for producing the gas barrier article.

Background Art

Gas barrier properties (gas blocking capability) typically of packaging materials are particularly important as the function of protecting contents from deterioration. For example, thermoplastic resin films such as polypropylene films and poly(ethylene terephthalate) films are thereby generally used as packaging films, because these films excel in workability, mechanical strength, and transparency. However, these films, when used for packaging typically of foodstuffs, may cause deterioration of the foodstuffs, because the films do not sufficiently block gases such as oxygen gas.

A known technique for improving the gas barrier properties of a film is a technique of dispersing a layered material such as a layered silicate in the film to improve the gas barrier properties of the film (see Patent Document 1) .

This technique, however, needs a large amount of the layered material because the layered material spreads in a thickness direction of the film, and such large amount of the layered material causes an increased melt viscosity and/or granular defects, thereby impedes smooth formation of the film, and significantly varies not only the gas barrier properties but also the mechanical properties of the resulting film.

To avoid these problems, there has been proposed a technique for improving the gas barrier properties of a film by applying a dispersion of a swellable layered silicate to the surface of the film (see Patent Document 2). This technique, however, needs a solvent such as water or an organic solvent to prepare the dispersion of a swellable layered silicate to be applied to the surface of the film to form a thin film thereon. When such a solvent is used, the technique needs an extra step of evaporating (drying) and removing the solvent, and this step requires an enormous amount of heat energy. In addition, when an organic solvent is used as the solvent, the technique requires an aftertreatment such as recovery or combustion of the solvent after evaporation, because the organic solvent places a load on the environment. When water is used as the solvent, the dispersion may often cause uneven coating, crawling, and/or pinholes on the surface of the film, and the technique may require a treatment for hydrophilization typically through corona treatment or primer coating to avoid these problems.

Patent Document 1: Japanese Unexamined Patent Application Publication (JP-A) No. H06(1994)-93133
Patent Document 2: Japanese Unexamined Patent Application Publication (JP-A) No. 2000-336303

Disclosure of Invention

Problems to be Solved by the Invention

Accordingly, an object of the present invention is to provide a gas barrier article which exerts gas barrier properties by the action of a gas barrier material contained in a small content.
Another object of the present invention is to provide a gas barrier article having a multilayer structure including a monomer-absorptive layer and a polymer layer containing an unevenly distributed gas barrier material. This gas barrier material does not need volatile components, such as organic solvents, placing load on the environment in its production, can contain the gas barrier material in a controlled distribution in the polymer layer containing the unevenly distributed gas barrier material, and shows satisfactory adhesion between the monomer-absorptive layer and the polymer layer containing the unevenly distributed gas barrier material.

Means for Solving the Problems

After intensive investigations to achieve the objects, the present inventors have found that, when a layer of a polymerizable composition containing at least a gas barrier material and a polymerizable monomer is provided on at least one side of a monomer-absorptive layer capable of absorbing the polymerizable monomer, the gas barrier material migrates in the polymerizable composition layer containing the gas barrier material to give a polymerizable composition layer containing the gas barrier material being unevenly distributed, and the polymerizable composition layer containing the unevenly distributed gas barrier material, when polymerized, gives a multilayer structure including a monomer-absorptive layer and a polymer layer containing the unevenly distributed gas barrier material; and that, in the multilayer structure including the monomer-absorptive layer and the polymer layer containing the unevenly distributed gas barrier material, the polymer layer containing the unevenly distributed gas barrier material exerts gas barrier properties. The present invention has been made based on these findings.

Specifically, the present invention provides, in an embodiment, a gas barrier article having a multilayer structure including a polymer layer as a layer including a polymer; and a monomer-absorptive layer present on the polymer layer, in which the monomer-absorptive layer is capable of absorbing at least one of monomer component(s) constituting the polymer, the polymer layer is a polymer layer containing a gas barrier material, and the gas barrier material is unevenly distributed in the layer and enriched at an interface, or in the vicinity thereof, opposite to another interface with the monomer-absorptive layer.

The gas barrier article may further include a cover film present on an opposite side of the polymer layer to the monomer-absorptive layer. The vicinity of the interface opposite to the other interface with the monomer-absorptive layer is preferably a region ranging from the interface opposite to the other interface with the monomer-absorptive layer and occupying, in a thickness direction, 50% or less of the total thickness of the monomer-absorptive layer and the polymer layer.

The monomer-absorptive layer in the gas barrier article is preferably a monomer-absorptive polymer layer including a polymer. The polymer constituting the monomer-absorptive polymer layer preferably contains at least one monomer component in common with the polymer constituting the polymer layer containing the unevenly distributed gas barrier material.

The gas barrier material in the gas barrier article may be an inorganic material. The inorganic material herein is preferably at least one material selected from the group consisting of a layered clay mineral, a silica, and an aluminum oxide.

The polymer of the polymer layer containing the unevenly distributed gas barrier material in the gas barrier article is preferably an acrylic polymer.

The gas barrier article may be in the form of a tape or sheet. The gas barrier article may be adopted to blocking water vapor and/or blocking oxygen gas.

The present invention further provides, in another embodiment, a process for producing a gas barrier article. The process includes the steps of providing a polymerizable composition layer containing a gas barrier material on at least one side of the monomer-absorptive layer including a polymerizable composition containing at least the gas barrier material and a polymerizable monomer, the monomer-absorptive layer being capable of absorbing the polymerizable monomer; whereby allowing the gas barrier material to migrate within the polymerizable composition layer containing the gas barrier material to give a polymerizable composition layer containing the gas barrier material, in which the gas barrier material is unevenly distributed in the layer and enriched at an interface, or in the vicinity thereof, opposite to another interface with the monomer-absorptive layer; and carrying out polymerization of the polymerizable composition layer containing the unevenly distributed gas barrier material to form a polymer layer containing the gas barrier material being unevenly distributed in the layer and enriched at an interface, or in the vicinity thereof, opposite to another interface with the monomer-absorptive layer, to thereby yield a gas barrier article having a multilayer structure including the monomer-absorptive layer and the polymer layer containing the unevenly distributed gas barrier material.

The present invention further provides, in yet another embodiment, a process for producing a gas barrier article. This process includes the steps of preparing a laminate, in which the laminate includes, in the following order, a monomer-absorptive sheet, a polymerizable composition layer containing a gas barrier material, and a cover film, the monomer-absorptive sheet has a monomer-absorptive layer with a monomer-absorptive face, the polymerizable composition layer is present on the monomer-absorptive face of the monomer-absorptive sheet and includes a polymerizable composition containing at least a polymerizable monomer and the gas barrier material, and the monomer-absorptive sheet is capable of absorbing the polymerizable monomer; allowing the gas barrier material to migrate within the polymerizable composition layer containing the gas barrier material to give a polymerizable composition layer containing the gas barrier material, in which the gas barrier material is unevenly distributed in the layer and enriched at an interface, or in the vicinity thereof, opposite to another interface with the monomer-absorptive layer; and carrying out polymerization of the polymerizable composition layer containing the unevenly distributed gas barrier material to form a polymer layer containing the gas barrier material, in which the gas barrier material is unevenly distributed in the layer and enriched at an interface, or in the vicinity thereof, opposite to another interface with the monomer-absorptive layer, to thereby yield a gas barrier article having a multilayer structure including the monomer-absorptive layer and the polymer layer containing the unevenly distributed gas barrier material.

The cover film in the production process may have releasability (removability).

The monomer-absorptive layer in the production processes is preferably a monomer-absorptive polymer layer including a polymer. The polymer of the monomer-absorptive polymer layer preferably contains at least one monomer component in common with the polymer of the polymer layer containing the unevenly distributed gas barrier material.

The polymerization of the polymerizable composition layer containing the gas barrier material may be performed through photoirradiation in the production processes.

In the production processes, the gas barrier material may be an inorganic material. An acrylic monomer is preferably used as the polymerizable monomer.

The production processes may produce a gas barrier article in the form of a tape or sheet.

Advantages

Gas barrier articles according to embodiments of the present invention have the above configurations and can thereby exert gas barrier properties by the action of a gas barrier material contained in a small content. The production of the gas barrier articles does not need organic solvents and other volatile components that place load on the environment. In addition, the resulting gas barrier articles have a multilayer structure including a monomer-absorptive layer and a polymer layer containing an unevenly distributed gas barrier material, contain the gas barrier material unevenly distributed in a controlled distribution in the polymer layer, and have satisfactory adhesion between the monomer-absorptive layer and the polymer layer containing the unevenly distributed gas barrier material. Brief Description of Drawings

[Fig. 1] Fig. 1 is a schematic cross-sectional view of an article according to Example 1.
[Fig. 2] Fig. 2 is a schematic cross-sectional view of an article according to Comparative Example 1.
[Fig. 3] Fig. 3 is a scanning electron micrograph illustrating part of a sample section of the article according to Example 1.

Reference Numerals

1a cross section of article according to Example 1
1b cross section of article according to Comparative

Example 1

11 portion enriched with gas barrier material
12 photo-polymerized/cured layer containing gas barrier material
13 monomer-absorptive layer
14 base film
15 supported monomer-absorptive sheet
16 portion where gas barrier material is sparse
17 gas barrier material

Best Modes for Carrying Out the Invention

Gas barrier articles according to embodiments of the present invention are gas barrier articles (gas barrier members) each having a multilayer structure including a polymer layer, and a monomer-absorptive layer present on the polymer layer and capable of absorbing at least one of monomer component(s) constituting the polymer layer, in which the polymer layer is a polymer layer containing a gas barrier material, which gas barrier material is unevenly distributed with respect to the polymer and is enriched at an interface, or in the vicinity thereof, opposite to another interface with the monomer-absorptive layer. The portion where the gas barrier material is enriched is generally in the form of a layer.

The gas barrier articles develop gas barrier properties particularly in a portion enriched with the gas barrier material. Specifically, the gas barrier material in the polymer layer is unevenly distributed and enriched at an interface, or in the vicinity thereof, opposite to another interface with the monomer-absorptive layer (this portion is also referred to as a "portion enriched with the gas barrier material" or "layer enriched with the gas barrier material") .

As used herein the term "interface" refers to an interfacial boundary at which two different substances are in contact with each other. By way of example, when existing in an atmosphere (air), the surface of the polymer layer containing the unevenly distributed gas barrier material is naturally in contact with the atmosphere and is present as an "interface". In the polymer layer of the gas barrier article containing the unevenly distributed gas barrier material, an interface or the vicinity thereof opposite to another interface with the monomer-absorptive layer is also referred to as a "layer surface or in the vicinity thereof" or a "surface or the vicinity thereof". When the polymer layer containing the unevenly distributed gas barrier material constitutes an outermost layer, an interface, or the vicinity thereof, opposite to another interface with the monomer-absorptive layer constitutes a surface, or the vicinity thereof, of the gas barrier article.

Accordingly, the gas barrier article according to an embodiment of the present invention may have a multilayer structure including a monomer-absorptive layer and a polymer layer containing an unevenly distributed gas barrier material, in which the gas barrier material in the polymer layer is unevenly distributed with respect to the polymer and enriched in a layer surface or in the vicinity thereof, and the monomer-absorptive layer is capable of absorbing at least one of monomer component(s) constituting the polymer of the polymer layer containing the unevenly distributed gas barrier material.

The gas barrier articles are generally in the form or a tape or sheet, though the shapes or forms of the gas barrier articles are not especially limited and can be chosen as appropriate according to necessity, as long as having a multilayer structure including a monomer-absorptive layer and a polymer layer containing an unevenly distributed gas barrier material. When having a surface (surface of the polymer layer containing the unevenly distributed gas barrier material or of the monomer-absorptive layer) showing adhesiveness, the gas barrier article may be used as a gas barrier pressure-sensitive adhesive tape or sheet which exerts gas barrier properties. Independently, the gas barrier article may be formed into a gas-barrier pressure-sensitive adhesive tape or sheet by providing a pressure-sensitive adhesive layer (tacky adhesive layer) containing a known pressure-sensitive adhesive (tacky adhesive). Exemplary pressure-sensitive adhesives herein include acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine-containing pressure-sensitive adhesives, and epoxy pressure-sensitive adhesives.

The gas barrier articles may also be in the form of a film. Specifically, the gas barrier articles may each be a gas barrier film in the form of a film. Independently, the gas barrier articles may be wound to form a roll or be stacked to form a laminate of sheets.

The surfaces of the polymer layer containing the unevenly distributed gas barrier material and the monomer-absorptive layer in the gas barrier articles may each be protected by a cover film. The cover film may have releasability or not.

Upon the use of gas barrier articles, the cover film may be removed (peeled off) or may remain as intact to constitute a part of the articles without removing therefrom.

A gas barrier article in an embodiment includes a monomer-absorptive sheet having a monomer-absorptive layer. In this embodiment, the monomer-absorptive layer of the monomer-absorptive sheet is used as the monomer-absorptive layer. Independently, such gas barrier articles may include one or more other layers, such as intermediate layers and under coats, within ranges not adversely affecting the advantages of the present invention.

[Polymerizable Composition Layer Containing Gas Barrier Material]

The polymerizable composition layer containing the gas barrier material is a layer formed from a polymerizable composition containing at least a gas barrier material and a polymerizable monomer that is polymerizable by the action of light (radiation) and/or heat. The polymerizable composition layer containing the gas barrier material may be a polymerizable composition layer containing particles, which layer is a layer formed from a polymerizable composition containing particles, which particles are an inorganic material and work as the gas barrier material. Independently, the polymerizable composition layer containing the gas barrier material may be a photopolymerizable composition layer containing particles, which layer is formed from a photopolymerizable composition containing particles as the gas barrier material and further containing a photoinitiator as a polymerization initiator, in which the particles are an inorganic material. The polymerizable composition containing the gas barrier material may be a partially polymerized composition, part of which has been polymerized, from the points typically of handleability and coatability of the composition.

The polymerizable composition contains at least a gas barrier material and a polymerizable monomer that is polymerizable by the action of light and/or heat. The polymerizable composition may further contain one or more polymerization initiators such as photoinitiators and thermopolymerization initiators according to necessity. Particularly, the gas barrier article in an embodiment includes a polymer layer containing an unevenly distributed gas barrier material, which polymer layer is formed from a polymerizable composition containing particles of an inorganic material as the gas barrier material. In this embodiment, the polymer layer is a polymerized/cured layer containing particles being unevenly distributed in the layer, in which the polymerized/cured layer is formed through polymerization/curing of a polymerizable composition layer containing the particles, and the polymerizable composition layer is a layer of polymerizable composition containing a gas barrier material (polymerizable composition layer containing the gas barrier material).

The polymerizable composition layer containing the gas barrier material gives a polymer layer containing the gas barrier material unevenly distributed according to the following mechanism. (i) The polymerizable composition layer containing the gas barrier material undergoes polymerization and curing by the application of active energy rays and/or heat to form a polymer layer (cured layer). (ii) When the polymerizable composition layer containing the gas barrier material is provided so as to be in contact with the monomer-absorptive layer, the polymerizable monomer in the polymerizable composition layer containing the gas barrier material is absorbed by the monomer-absorptive layer. (iii) The gas barrier material thereby migrates in the polymerizable composition layer containing the gas barrier material to give a polymerizable composition layer containing the gas barrier material, which gas barrier material is unevenly distributed in the layer and enriched at an interface or in the vicinity thereof (layer surface or in the vicinity thereof) opposite to the other interface with the monomer-absorptive layer.

It is important that the polymerizable monomer is a compound that can undergo polymerization, such as radical polymerization or cationic polymerization, by using light energy and/or heat energy, irrespective of the reaction mechanism of polymerization. Exemplary polymerizable monomers include radically polymerizable monomers such as acrylic monomers to form acrylic polymers; cationically polymerizable monomers such as epoxy monomers to form epoxy resins, oxetane monomers to form oxetane resins, and vinyl ether monomers to form vinyl ether resins; combinations of polyisocyanates with polyols to form urethane resins; and combinations of polycarboxylic acids with polyols to form polyester resins. Among them, acrylic monomers are preferably used. Each of different polymerizable monomers may be used alone or in combination.

The acrylic polymers, epoxy resins, oxetane resins, vinyl ether resins, urethane resins, and polyester resins function typically as base polymers for acrylic pressure-sensitive adhesives (tacky adhesives), base polymers for epoxy pressure-sensitive adhesives, base polymers for oxetane pressure-sensitive adhesives, base polymers for vinyl ether pressure-sensitive adhesives, base polymers for urethane pressure-sensitive adhesives, and base polymers for polyester pressure-sensitive adhesives, respectively. The polymerizable composition containing the gas barrier material may therefore be a pressure-sensitive adhesive composition containing a gas barrier material (hereinafter also referred to as a "pressure-sensitive adhesive composition containing the gas barrier material"). Accordingly, the polymer layer containing the unevenly distributed gas barrier material formed through curing of the polymerizable composition containing the gas barrier material may be a pressure-sensitive adhesive layer containing an unevenly distributed gas barrier material, which layer is formed through polymerization of a pressure-sensitive adhesive composition containing the gas barrier material. In a preferred embodiment of the present invention, an acrylic monomer is used as the polymerizable monomer. The pressure-sensitive adhesive composition containing the gas barrier material is therefore preferably an acrylic pressure-sensitive adhesive composition containing the gas barrier material. In addition, the polymer in the polymer layer containing the unevenly distributed gas barrier material and constituting the polymer article is preferably an acrylic polymer.

Of such acrylic monomers, (meth)acrylic esters are preferred, of which alkyl (meth)acrylates, (meth)acrylic esters having an alicyclic hydrocarbon group, and (meth)acrylic esters having an oxygen-containing heterocyclic group are more preferred. Each of different alkyl (meth)acrylates may be used alone or in combination.

Exemplary alkyl (meth)acrylates include alkyl (meth)acrylates whose alkyl moiety having 1 to 20 carbon atoms, such as methyl (meth)acrylates, ethyl (meth)acrylates, propyl (meth)acrylates, isopropyl (meth)acrylates, butyl (meth)acrylates, isobutyl (meth)acrylates, s-butyl (meth)acrylates, t-butyl (meth)acrylates, pentyl (meth)acrylates, isopentyl (meth)acrylates, hexyl (meth)acrylates, heptyl (meth)acrylates, octyl (meth)acrylates, 2-ethylhexyl (meth)acrylates, isooctyl (meth)acrylates, nonyl (meth)acrylates, isononyl (meth)acrylates, decyl (meth)acrylates, isodecyl (meth)acrylates, undecyl (meth)acrylates, dodecyl (meth)acrylates, tridecyl (meth)acrylates, tetradecyl (meth)acrylates, pentadecyl (meth)acrylates, hexadecyl (meth)acrylates, heptadecyl (meth)acrylates, octadecyl (meth)acrylates, nonadecyl (math) acrylates, and eicosyl (meth)acrylates; of which alkyl (meth)acrylates whose alkyl moiety having 2 to 14 carbon atoms are preferred, and alkyl (meth)acrylates whose alkyl moiety having 2 to 10 carbon atoms are more preferred.

Exemplary (meth)acrylic esters having an alicyclic hydrocarbon group include cyclopentyl (meth)acrylates, cyclohexyl (meth)acrylates, and isobornyl (meth)acrylates. Exemplary (meth)acrylic esters having an oxygen-containing heterocyclic group include tetrahydrofurfuryl acrylate.

Examples of (meth)acrylic esters further include (meth)acrylic esters having an aromatic hydrocarbon group, such as phenyl (meth)acrylates; and polyalkylene glycol (meth)acrylates, in addition to the alkyl (meth)acrylates, (meth) acrylic esters having an alicyclic hydrocarbon group, and (meth)acrylic esters having an oxygen-containing heterocyclic group.

Each of different (meth)acrylic esters can be used alone or in combination. When one or more (meth)acrylic esters are used as main monomer components for constituting the polymerizable composition containing the gas barrier material, it is important that the amount of the (meth)acrylic esters is, for example, 60 percent by weight or more (and preferably 80 percent by weight or more) based on the total amount of monomer components constituting the polymerizable composition containing the gas barrier material. The (meth)acrylic esters herein are represented by alkyl (meth) acrylates, (meth)acrylic esters having an alicyclic hydrocarbon group, and (meth)acrylic esters having an oxygen-containing heterocyclic group.

The composition containing the gas barrier material may further contain one or more copolymerizable monomers as monomer components. Typically, in an embodiment, the polymerizable composition is an acrylic polymerizable composition containing a gas barrier material and including one or more (meth)acrylic esters as main monomer components constituting the polymerizable composition. This acrylic polymerizable composition may further contain one or more copolymerizable monomers of every kind, such as polar-group-containing monomers and multifunctional monomers.

The use of one or more copolymerizable monomers as monomer components typically helps the resulting gas barrier article to be controlled in film properties such as elastic modulus, elongation percentage, breaking strength, chemical resistance, water-proofness, and solvent resistance. Each of different copolymerizable monomers can be used alone or in combination.

Exemplary polar-group-containing monomers include carboxyl-containing monomers such as (meth)acrylic acids, itaconic acid, maleic acid, fumaric acid, crotonic acid, and isocrotonic acid, and anhydrides of them, such as maleic anhydride; hydroxyl-containing monomers including hydroxyalkyl (meth)acrylates such as hydroxyethyl (meth) acrylates, hydroxypropyl (meth)acrylates, and hydroxybutyl (meth)acrylates; amido-containing monomers such as acrylamide, methacrylamide, N,N-dimethyl(meth)acrylamides, N-methylol (meth) acrylamides, N-methoxymethyl(meth)acrylamides, and N-butoxymethyl(meth)acrylamides; amino-containing monomers such as aminoethyl (meth)acrylates, dimethylaminoethyl (meth)acrylates, and t-butylaminoethyl (meth)acrylates; glycidyl-containing monomers such as glycidyl (meth)acrylates and methylglycidyl (meth)acrylates; cyano-containing monomers such as acrylonitrile and methacrylonitrile; and heterocycle-containing vinyl monomers such as N-vinyl-2-pyrrolidone, (meth)acryloylmorpholines, as well as N-vinylpyridine, N-vinylpiperidone, N-vinylpyrimidine, N-vinylpiperazine, N-vinylpyrazine, N-vinylpyrrole, N-vinylimidazole, and N-vinyloxazole. of such polar-group-containing monomers, carboxyl-containing monomers, such as acrylic acid, and anhydrides of them are preferred.

The amount of polar-group-containing monomers can be modified as appropriate according to the purpose and intended use of the resulting gas barrier article. Typically, when the gas barrier article is used in applications where the polymer layer containing the unevenly distributed gas barrier material should have adhesion (e.g., adhesion typically to a glass or plastic container), the amount is 30 percent by weight or less (e.g., from 1 to 30 percent by weight), and preferably from 3 to 20 percent by weight, based on the total amount of monomer components. Polar-group-containing monomers, if used in an amount of more than 30 percent by weight based on the total amount of monomer components, may typically cause the polymer layer containing the unevenly distributed gas barrier material to be excessively hard (rigid) and to thereby have insufficient adhesion. In contrast, if the amount of polar-group-containing monomers is excessively small (e.g., less than 1 percent by weight based on the total amount of monomer components), the polymer layer containing the unevenly distributed gas barrier material may have an insufficient cohesive strength and have excessively high tack on surface, and this may impede the handling of the resulting gas barrier article.

When the gas barrier articles are used in applications where hard properties of the polymer layer containing the unevenly distributed gas barrier material are required (e.g., in hard coating applications), the amount of polar-group-containing monomer is 95 percent by weight or less (e.g., from 0.01 to 95 percent by weight), and preferably from 1 to 70 percent by weight, based on the total amount of monomer components. Polar-group-containing monomers, if used in an amount of more than 95 percent by weight, may typically cause the gas barrier article to have insufficient water-proofness to thereby suffer from being significantly affected in quality by the use conditions such as humidity and water. In contrast, if the amount of polar-group-containing monomers is excessively small (e.g., 0.01 percent by weight or less), large amounts of (meth)acrylic esters having high glass transition temperatures (Tg) (e.g., isobornyl acrylate) and/or multifunctional monomers are needed to provide satisfactory hard properties, and this may cause the resulting gas barrier article to be excessively fragile.

Exemplary multifunctional monomers include hexanediol di(meth)acrylates, (poly)ethylene glycol di(meth)acrylates, (poly)propylene glycol di(meth)acrylates, neopentyl glycol di(meth)acrylates, pentaerythritol di(meth)acrylates, pentaerythritol tri(meth)acrylates, dipentaerythritol hexa(meth)acrylates, trimethylolpropane tri(meth)acrylates, tetramethylolmethane tri(meth)acrylates, allyl (meth)acrylates, vinyl (meth)acrylates, divinylbenzene, epoxy acrylates, polyester acrylates, urethane acrylates, butyl di (meth) acrylates, and hexyl di(meth)acrylates.

The amount of multifunctional monomers can be modified as appropriate according to the purpose and intended use of the resulting gas barrier article. Typically, when the gas barrier article is used in applications where the polymer layer containing the unevenly distributed gas barrier material should show adhesion (e.g., adhesion typically to a glass or plastic container), the amount of multifunctional monomers is 10 percent by weight or less (e.g., from 0.01 to 10 percent by weight), and preferably from 0.02 to 5 percent by weight, based on the total amount of monomer components. Multifunctional monomers, if used in an amount of more than 5 percent by weight based on the total amount of monomer components, may typically cause the polymer layer containing the unevenly distributed gas barrier material to be excessively hard (rigid) to thereby show insufficient adhesion. In contrast, if the amount of multifunctional monomers is excessively small (e.g., less than 0.01 percent by weight based on the total amount of monomer components), for example, the polymer layer containing the unevenly distributed gas barrier material may have an insufficient cohesive strength and thereby have excessively high tack on surface, and this may impede the handling of the resulting gas barrier article.

When the gas barrier article is used in applications where the polymer layer containing the unevenly distributed gas barrier material should have hard properties (e.g., in hard coating applications), the amount of multifunctional monomers is 95 percent by weight or less (e.g., from 0.01 to 95 percent by weight), and preferably from 1 to 70 percent by weight, based on the total amount of monomer components. Multifunctional monomers, if used in an amount of more than 95 percent by weight based on the total amount of monomer components, may cause large shrinkage upon curing through polymerization to thereby impede the formation of a gas barrier article in the form of a uniform film or sheet or may cause the resulting gas barrier article to be excessively fragile. In contrast, if the amount of multifunctional monomers is excessively small (e.g., 0.01 percent by weight or less), the resulting gas barrier article may not have sufficient solvent resistance and/or sufficient thermal stability.

In addition to polar-group-containing monomers and multifunctional monomers, exemplary copolymerizable monomers further include vinyl esters such as vinyl acetate and vinyl propionate; aromatic vinyl compounds such as styrene and vinyltoluene; olefins or dienes, such as ethylene, butadiene, isoprene, and isobutylene; vinyl ethers such as vinyl alkyl ethers; vinyl chloride; alkoxyalkyl (meth)acrylate monomers such as methoxyethyl (meth)acrylates and ethoxyethyl (meth)acrylates; sulfo-containing monomers such as sodium vinylsulfonate; phosphate-containing monomers such as 2-hydroxyethylacryloyl phosphate; imido-containing monomers such as cyclohexylmaleimide and isopropylmaleimide; isocyanate-containing monomers such as 2-methacryloyloxyethyl isocyanate; fluorine-containing (meth) acrylates; and silicon-containing (meth)acrylates.

Where necessary, one or more polymerization initiators, such as any of thermopolymerization initiators and photoinitiators (photopolymerization initiators), may be used in the composition. Specifically, the formation of a polymer layer containing an unevenly distributed gas barrier material herein can be performed while utilizing a curing reaction by the action of heat and/or active energy rays with one or more polymerization initiators such as thermopolymerization initiators and photoinitiators (photopolymerization initiators). This allows the polymerizable composition layer containing the unevenly distributed gas barrier material to be cured while maintaining the structure in which the gas barrier material is unevenly distributed in the layer. This in turn easily gives a polymer layer containing the gas barrier material, in which the gas barrier material is unevenly distributed in the layer and enriched at an interface, or in the vicinity thereof, opposite to another interface with the monomer-absorptive layer (in the layer surface or the vicinity thereof).

Exemplary photoinitiators usable herein include, but are not limited to, benzoin ether photoinitiators, acetophenone photoinitiators, $\alpha$-ketol photoinitiators, aromatic sulfonyl chloride photoinitiators, photoactive oxime photoinitiators, benzoin photoinitiators, benzil photoinitiators, benzophenone photoinitiators, ketal photoinitiators, and thioxanthone photoinitiators. Each of different photoinitiators can be used alone or in combination.

Specifically, exemplary ketal photoinitiators include 2,2-dimethoxy-2,2-diphenylethan-1-lone [e.g., trade name "IRGACURE 651" (supplied by Ciba Specialty Chemicals Corporation)]. Exemplary acetophenone photoinitiators include 1-hydroxycyclohexyl phenyl ketone [e.g., trade name "IRGACURE 184" (supplied by Ciba Specialty Chemicals Corporation)], 2,2-diethoxyacetophenone, 2,2-dimethoxy-2-phenylacetophenone, 4-phenoxydichloroacetophenone, and 4-(t-butyl)dichloroacetophenone. Exemplary benzoin ether photoinitiators include benzoin methyl ether, benzoin ethyl ether, benzoin propyl ether, benzoin isopropyl ether, and benzoin isobutyl ether. Exemplary acylphosphine oxide photoinitiators usable herein include trade name "Lucirin TPO" (supplied by BASF AG). Exemplary $\alpha$-ketol photoinitiators include 2-methyl-2-hydroxypropiophenone and 1-[4-(2-hydroxyethyl)phenyl]-2-methylpropan-1-one. Exemplary aromatic sulfonyl chloride photoinitiators include 2-naphthalenesulfonyl chloride. Exemplary photoactive oxime photoinitiators include 1-phenyl-1,1-propanedione-2-(o-ethoxycarbonyl)-oxime. Exemplary benzoin photoinitiators include benzoin. Exemplary benzil photoinitiators include benzil (dibenzoyl). Exemplary benzophenone photoinitiators include benzophenone, benzoylbenzoic acid, 3,3'-dimethyl-4-methoxybenzophenone, polyvinylbenzophenone, and $\alpha$-hydroxycyclohexyl phenyl ketone. Exemplary thioxanthone photoinitiators include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

Though not critical, the amount of photoinitiators can be chosen within ranges of, for example, from 0.01 to 5 parts by weight, and preferably from 0.05 to 3 parts by weight, per 100 parts by weight of the total monomer components constituting the polymerizable composition containing the gas barrier material.

A curing reaction by the action of active energy rays can be adopted herein to the curing of the polymerizable composition layer containing the unevenly distributed gas barrier material to form a polymer layer containing the gas barrier material unevenly distributed. This curing reaction may be adopted typically to the curing of a polymerizable composition layer containing unevenly distributed particles to form a photo-polymerized/cured layer containing unevenly distributed particles. Examples of such active energy rays include ionizing radiations such as alpha rays, beta rays, gamma rays, neutron beams, and electron beams; and ultraviolet rays, of which ultraviolet rays are preferred. Conditions for the application of active energy rays, such as irradiation energy, irradiation time, and irradiation procedure, are not especially limited, as long as the polymerizable composition layer containing the unevenly distributed gas barrier material can be cured to form a polymer layer containing the gas barrier material unevenly distributed (for example, as long as the polymerizable composition layer containing unevenly distributed particles can be cured to form a photo-polymerized/cured layer containing unevenly distributed particles).

Exemplary thermopolymerization initiator include azo polymerization initiators such as 2,2'-azobisisobutyronitrile, 2,2'-azobis-2-methylbutyronitrile, dimethyl 2,2'-azobis(2-methylpropioniate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine) dihydrochloride; peroxide polymerization initiators such as dibenzoyl peroxide and tert-butyl permaleate; and redox polymerization initiators such as the combination of an organic peroxide and a vanadium compound, the combination of an organic peroxide and dimethylaniline, and the combination of a naphthenic acid metal salt and butylaldehyde, aniline, or acetylbutyrolactone. The amount of thermopolymerization initiators is not especially limited, as long as they can be used as thermopolymerization initiators. The use of one or more redox polymerization initiators as the thermopolymerization initiators enables the composition to be polymerized at room temperature.

The polymerizable composition containing the gas barrier material may further contain appropriate additives according to necessity. Exemplary additives herein include surfactants such as ionic surfactants, silicone surfactants, and fluorochemical surfactants; crosslinking agents such as polyisocyanate crosslinking agents, silicone crosslinking agents, epoxy crosslinking agents, and alkyl-etherified melamine crosslinking agents; tackifiers such as tackifiers which are solid, semisolid, or liquid at room temperature and are composed typically of rosin derivative resins, polyterpene resins, petroleum resins, or oil-soluble phenol resins; plasticizers; fillers; age inhibitors; antioxidants; colorants such as pigments and dyestuffs; and various polymers as viscosity modifiers, such as acrylic resins, urethane resins, polyester resins, synthetic rubbers, and natural rubbers.

One or more inorganic materials are generally used as the gas barrier material, though the gas barrier material is not especially limited, as long as being unevenly distributed in the polymer layer to form such a structure as to suppress a gas in contact with the polymer layer containing the unevenly distributed gas barrier material from diffusing in the polymer layer. Each of different gas barrier materials can be used alone or in combination.

Exemplary inorganic materials as the gas barrier materials include particles (microparticles, microparticle powders) typically of silica, silicones (silicone powders), calcium carbonate, clay, titanium oxide, aluminum oxides, talc, layered silicates, clay minerals, metal powders, glass, glass beads, glass balloons, alumina balloons, ceramic balloons, titanium white (titanium dioxide), and carbon black. Among them, silica, aluminum oxides, and clay minerals are preferred, of which clay minerals are more preferred. The particles may be solid particles or hollow particles (balloons).

Of clay minerals as inorganic materials serving as the gas barrier materials, layered clay minerals are especially preferred. Exemplary layered clay minerals include smectites such as montmorillonite, beidellite, hectorite, saponite, nontronite, and stevensite; vermiculite; bentonite; and layered sodium silicates such as kanemite, kenyaite, and makatite. Any of naturally-occurring layered clay minerals and synthetically prepared layered clay minerals can be used without limitation.

The inorganic materials may be those which have been subjected to such processing as to allow the inorganic materials to swell with or disperse in the polymerizable monomer more readily. Examples of such processed inorganic materials include a layered clay mineral which has been subjected to ion exchange with an organic cationic compound using cation exchange properties thereof so as to introduce organic cations in between layers of the layered silicate, to thereby allow the layered silicate to swell with and disperse in acrylic monomer more readily (e.g., trade name "LUCENTITE SPN" supplied by CO-OP CHEMICAL CO., LTD.).

Though not critical, the particle diameter (average particle diameter) of particles is preferably such that the particles as the gas barrier material are distributed as compact (dense) as possible in a portion where the gas barrier material is enriched (portion enriched with the gas barrier material) in the polymer layer containing the unevenly distributed gas barrier material in the gas barrier article, from the viewpoint of obtaining satisfactory gas barrier properties. In this connection, the primary particle diameter of the particles may be chosen within ranges of from 5 nm to 5 $\mu$m, preferably from 6 nm to 1 $\mu$m, and more preferably from 7 nm to 0.5 $\mu$m. Particles of different particle diameters can be used in combination.

The particles can be in any form (shape) such as spheroidal (e.g., spherical or oval spherical), amorphous, needle-like, rodlike, or plate-like form. The particles may have holes (pores) and/or protrusions on their surfaces. The particles are preferably in a form other than spheroidal form and are more preferably in a plate-like form, for giving a portion of a structure densely enriched with the gas barrier material in the polymer layer containing the unevenly distributed gas barrier material.

Each of particles having different shapes can be used alone or in combination. For example, particles having a plate-like shape and particles having a spheroidal shape may be used in combination.

The surfaces of particles may have been subjected to any of surface treatments such as a treatment with a silicone compound or fluorinated compound for reducing surface tension.

Though not critical, the amount of gas barrier material(s) in the polymer layer containing the unevenly distributed gas barrier material may be chosen within such a range that the amount of gas barrier material in the polymerizable composition is from 0.001 to 100 parts by weight, preferably from 0.01 to 70 parts by weight, and more preferably from 0.1 to 50 parts by weight, per 100 parts by weight of total monomer components constituting the polymerizable composition containing the gas barrier material which in turn constitutes the polymer layer containing the unevenly distributed gas barrier material. A gas barrier material, if used in an amount of more than 100 parts by weight, may impede the production of a gas barrier article or may cause the resulting gas barrier article to suffer from problems in its strength. A gas barrier material, if used in the polymerizable composition in an amount of less than 0.001 part by weight, may not disperse and exist, on the average, in the surface or the vicinity thereof (interface, or the vicinity thereof, opposite to the other interface with the monomer-absorptive layer) of the polymer layer containing the unevenly distributed gas barrier material.

The polymerizable composition containing the gas barrier material can be prepared by mixing and dispersing the respective components homogeneously. The polymerizable composition containing the gas barrier material is generally formed into a sheet typically by applying the composition onto a base material. In this case, the polymerizable composition is preferably adjusted to have a viscosity suitable for the application operation. The viscosity of the polymerizable composition containing the gas barrier material can be controlled typically by incorporating any of polymers such as acrylic rubbers, polyurethanes, and thickening additives; and/or by polymerizing part of polymerizable monomers in the polymerizable composition. The viscosity is preferably from 5 to 50 Pa·s, and more preferably from 10 to 40 Pa·s, as determined by using a BH type viscometer with a No. 5 rotor under conditions at a number of revolutions of 10 rpm and a measurement temperature of 30°C. A polymerizable composition, if having a viscosity of less than 5 Pa·s, may not remain on the base material when applied thereto. In contrast, a polymerizable composition, if having an excessively high viscosity of more than 50 Pa·s, may be difficult to be applied by coating.

The application (coating) of the polymerizable composition containing the gas barrier material may be performed, for example, using a common coater such as comma roll coater, die roll coater, rotogravure roll coater, reverse roll coater, kiss roll coater, dip roll coater, bar coater, knife coater, or spray coater.

The polymerizable composition layer containing the gas barrier material is formed, for example, by applying the polymerizable composition to a predetermined surface of an appropriate carrier with any of the common coaters. Examples of the predetermined surface include a face provided by the monomer-absorptive layer; a monomer-absorptive face of the monomer-absorptive sheet; and a releasably treated surface of the cover film.

[Monomer-Absorptive Sheet]

A gas barrier article according to an embodiment of the present invention is produced by forming a polymerizable composition layer containing a gas barrier material on one or both sides of a monomer-absorptive layer, from a polymerizable composition containing the gas barrier material; whereby allowing the gas barrier material to migrate within the polymerizable composition layer containing the gas barrier material, to give a polymerizable composition layer containing the gas barrier material, which gas barrier material is unevenly distributed in the layer and enriched at an interface, or in the vicinity thereof, opposite to another interface with the monomer-absorptive layer; and carrying out polymerization of the polymerizable composition layer containing the unevenly distributed gas barrier material to form a polymer layer containing the unevenly distributed gas barrier material to thereby give a multilayer structure including the monomer-absorptive layer and the polymer layer containing the unevenly distributed gas barrier material.

Accordingly, the shape and other conditions of the monomer-absorptive sheet are not especialy limited, as long as the sheet has at least a monomer-absorptive layer providing a monomer-absorptive face that is capable of absorbing at least one of monomer component(s) in the polymerizable composition containing the gas barrier material.

Exemplary monomer-absorptive sheets include a monomer-absorptive sheet including a monomer-absorptive layer alone (hereinafter also referred to as a "carrier-less monomer-absorptive sheet"); and a monomer-absorptive sheet including a base material (carrier), and a monomer-absorptive layer present on the base material (hereinafter also referred to as a "supported monomer-absorptive sheet"). When the monomer-absorptive sheet is a carrier-less monomer-absorptive sheet, either one of both surfaces may provide the monomer-absorptive face. In contrast, when the monomer-absorptive sheet is a supported monomer-absorptive sheet, the surface of the monomer-absorptive layer provides the monomer-absorptive face.

(Monomer-Absorptive Layer)

The monomer-absorptive layer is a layer providing a monomer-absorptive face in the monomer-absorptive sheet and has only to be capable of absorbing at least a polymerizable monomer from the polymerizable composition layer, which polymerizable composition layer contains the gas barrier material and is present on the monomer-absorptive face. Exemplary materials for the monomer-absorptive layer include sheets made from papers such as kraft paper, crepe paper, and Japanese paper; fibrous sheets such as woven fabrics, nonwoven fabrics, and nets; porous films; polymers such as acrylic polymers, polyurethane resins, ethylene-vinyl acetate copolymers, and epoxy resins; natural rubbers; and synthetic rubbers. The monomer-absorptive layer may include each of different materials alone or in combination.

In a preferred embodiment of the present invention, one or more polymers are used as materials for constituting the monomer-absorptive layer. Specifically, the monomer-absorptive layer is preferably a monomer-absorptive polymer layer including one or more polymers; and the monomer-absorptive sheet is preferably a sheet having a polymer layer. Though not limited, the polymers herein are preferably polymers having at least one monomer component in common with polymerizable monomer(s) contained in the polymerizable composition containing the gas barrier material. Typically, an acrylic polymer is preferably used as the polymer for constituting the monomer-absorptive layer when the polymerizable composition containing the gas barrier material is an acrylic polymerizable composition containing the gas barrier material. This is because the acrylic monomer as a polymerizable monomer of the acrylic polymerizable composition containing the gas barrier material is in common in constitutional unit with the acrylic polymer constituting the acrylic monomer constituting the monomer-absorptive layer, and this accelerates the migration of the acrylic monomer as the polymerizable monomer.

The monomer-absorptive layer may be composed of a polymer layer prepared through polymerization of a polymerizable composition having the same formulation as that of the polymerizable composition containing the gas barrier material, except for removing the gas barrier material therefrom. Typically, the monomer-absorptive layer may be composed of a photo-polymerized/cured layer formed through curing of a photopolymerizable composition having a composition corresponding to that of the photopolymerizable composition containing particles, except for removing the particles therefrom.

In another embodiment, the monomer-absorptive layer may be a pressure-sensitive adhesive layer (tacky adhesive layer; self-adhesive layer) including a pressure-sensitive adhesive (tacky adhesive). Exemplary pressure-sensitive adhesives include acrylic pressure-sensitive adhesives, epoxy pressure-sensitive adhesives, oxetane pressure-sensitive adhesives, vinyl ether pressure-sensitive adhesives, urethane pressure-sensitive adhesives, and polyester pressure-sensitive adhesives. Typically, when an acrylic monomer is used as the polymerizable monomer, the pressure-sensitive adhesive herein is preferably an acrylic pressure-sensitive adhesive including an acrylic polymer as a base polymer, because the acrylic polymer has a constitutional unit in common with the acrylic monomer, and the monomer-absorptive layer is thereby capable of absorbing the polymerizable monomer to a further extent.

The volume of the monomer-absorptive layer may be constant or may vary between before and after the absorption of the polymerizable monomer. Typically, in an embodiment, the monomer-absorptive layer is a layer formed from a polymeric material. Exemplary polymeric materials include the above-mentioned polymers such as acrylic polymers, polyurethane resins, ethylene-vinyl acetate copolymers, and epoxy resins; and polymers formed through polymerization of a polymerizable composition having the same formulation as that of the polymerizable composition containing the gas barrier material, except for removing the gas barrier material therefrom. In this embodiment, the volume of the polymeric material layer as the monomer-absorptive layer generally increases as a result of absorbing the polymerizable monomer from the polymerizable composition layer containing the gas barrier material. Specifically, the polymeric material constituting the monomer-absorptive layer swells as a result of absorbing the polymerizable monomer. Accordingly, the monomer-absorptive layer may be also a layer swellable with monomer, which layer increases in its volume as a result of absorbing the polymerizable monomer.

The monomer-absorptive layer, typically when being a layer of the polymeric material, may be formed by applying the polymeric material to a predetermined surface of an appropriate carrier (e.g., a base material mentioned below or the releasably treated surface of the cover film) with any of the common coaters. The polymeric material layer as the monomer-absorptive layer provided on the carrier may be subjected to drying and/or curing (e.g., curing by the action of light (photocuring)) according to necessity. The polymeric material may be adjusted to have a viscosity suitable for the application by compounding any of polymers such as acrylic rubbers and thickening additives; and/or polymerizing part of the polymerizable monomer through heating and/or photoirradiation, before being applied to the predetermined surface of the appropriate carrier.

Though not critical, the thickness of the monomer-absorptive layer before absorbing the polymerizable monomer can be chosen within ranges of, for example, from 1 to 2000 μm, preferably from 2 to 1000 μm, and more preferably from 5 to 500 μm. The monomer-absorptive layer may have a single-layer structure or multilayer structure.

(Base Material)

When the monomer-absorptive sheet is a supported monomer-absorptive sheet, a base material is used therein. Exemplary base materials usable herein include appropriate thin articles including paper base materials such as papers; fibrous base materials such as woven fabrics, nonwoven fabrics, and nets; metallic base materials such as metallic foils and metallic plates; plastic base materials such as plastic films and plastic sheets; rubber base materials such as rubber sheets; foams such as foamed sheets; and laminates of these materials [e.g., a laminate of a plastic base material and another base material; and a laminate of plastic films (or sheets) with each other]. Plastic base materials such as plastic films or sheets are preferably used as the base material. Exemplary materials for the plastic films or sheets include olefinic resins containing an α-olefin as a monomer component, such as polyethylenes (PEs), polypropylenes (PPs), ethylene-propylene copolymers, and ethylene-vinyl acetate copolymers (EVAs); polyester resins such as poly(ethylene terephthalate)s (PETs), poly(ethylene naphthalate)s (PENs), and poly(butylene terephthalate)s (PBTs); poly(vinyl chloride)s (PVCs); vinyl acetate resins; poly(phenylene sulfide)s (PPSs); amide resins such as polyamides (nylons) and wholly aromatic polyamides (aramids); polyimide resins; and poly(ether ether ketone)s (PEEKs). Each of different materials can be used alone or in combination.

When used as the base material, a plastic base material may be controlled in deformation properties, such as elongation percentage, typically through a drawing treatment. When the monomer-absorptive layer is formed through curing by the action of active energy rays, the base material is preferably one that does not adversely affect the transmission of the active energy rays.

The surface of the base material may have been subjected to a common surface treatment, for increasing adhesion with the monomer-absorptive layer. Examples of such surface treatments include oxidizing treatments according to a chemical or physical procedure, such as corona treatment, chromate treatment, exposure to ozone, exposure to flame, exposure to a high-voltage electric shock, and treatment with ionizing radiation. The surface may also be subjected to a coating treatment with a primer or a release agent (e.g., silicone release agent).

When the surface of the base material has been subjected to a release treatment (parting treatment) with a release agent, the base material can be easily removed from the monomer-absorptive layer to expose the surface of the monomer-absorptive layer upon use of the gas barrier article. Thus, the gas barrier article may be used while the surface of the monomer-absorptive layer is exposed.

The thickness of the base material is typically generally about 1000 $\mu$m or less (e.g., about from 1 to 1000 $\mu$m), preferably about from 1 to 500 $\mu$m, and more preferably about from 3 to 300 $\mu$m, though it is not critical and can be chosen as appropriate according typically to the strength, flexibility, and intended use. The base material may have a single-layer structure or multilayer structure.

[Cover Film]

In an embodiment of the present invention, a polymerizable composition layer containing a gas barrier material is provided on at least one side (surface) of the monomer-absorptive layer using a polymerizable composition containing the gas barrier material to form a polymerizable composition layer containing the gas barrier material unevenly distributed; and thereafter the polymerizable composition layer containing the unevenly distributed gas barrier material is polymerized to form a polymer layer containing the unevenly distributed gas barrier material. In this embodiment, the surface of the polymerizable composition layer containing the unevenly distributed gas barrier material is preferably covered with a cover film during the polymerization of the polymerizable composition layer containing the unevenly distributed gas barrier material, so as to avoid adverse effects typically of oxygen in the atmosphere (air) on the reaction (polymerization). The resulting gas barrier article may be used after removing the cover film therefrom or without removing the cover film. When the gas barrier article is used without removing the cover film, the cover film is used as part of the gas barrier article.

Though not limited, as long as being a thin article that blocks the entrance of oxygen, the cover film is preferably transparent when a photopolymerization reaction is adopted in the polymerization. For example, common release papers may be used as the cover film. Specifically, exemplary cover films usable herein include base materials having a releasably treated layer (releasable layer) with a release agent (parting agent) on at least one surface; low-adhesive base materials composed typically of any of fluorocarbon polymers (e.g., polytetrafluoroethylenes, polychlorotrifluoroethylenes, poly (vinyl fluoride)s, poly(vinylidene fluoride)s, tetrafluoroethylene-hexafluoropropylene copolymers, and chlorofluoroethylene-vinylidene fluoride copolymers); and low-adhesive base materials composed typically of nonpolar polymers including olefinic resins such as polyethylene and polypropylene. In this connection, the low-adhesive base materials can utilize both surfaces as release surfaces; in contrast, the base materials having a releasably treated layer or layers can utilize the releasably treated layer surface(s) as release surface(s) (releasably treated surface(s)).

The cover film may be a cover film including a cover-film base material and a releasably treated layer present on at least one side of the base material (i.e., a base material having a releasably treated layer) or may be a cover-film base material alone.

Exemplary cover-film base materials include plastic base films (synthetic resin films) such as polyester films (e.g., poly(ethylene terephthalate) films), olefinic resin films (e.g., polyethylene films and polypropylene films), poly(vinyl chloride) films, polyimide films, polyamide films (nylon films), and rayon films; papers (e.g., woodfree paper, Japanese paper, kraft paper, glassine paper, synthetic paper, and topcoat paper); and laminates (multilayer assemblies having two or three layers) of these materials prepared typically through lamination or coextrusion. Of the cover-film base materials, those using plastic base films having high transparency are preferred, of which those using poly(ethylene terephthalate) films are more preferred.

Examples of the release agent include, but are not limited to, silicone release agents, fluorine release agents, and long-chain alkyl release agents. Each of different release agents may be used alone or in combination. Such a cover film having been subjected to a release treatment with a release agent may be formed according typically to a known procedure.

Though not critical, the thickness of the cover film can be chosen within ranges of, for example, from 12 to 250 $\mu$m, and preferably from 20 to 200 $\mu$m, from the points of satisfactory handleability and economic efficiency. The cover film may have a single-layer structure or multilayer structure.

[Gas Barrier Articles]

Gas barrier articles according to embodiments of the present invention are articles (members) each having a multilayer structure including at least a polymer layer and a monomer-absorptive layer capable of absorbing at least one of monomer component(s) constituting the polymer layer, in which the polymer layer is a polymer layer containing an unevenly distributed gas barrier material (polymer layer containing a banded gas barrier material), which gas barrier material is unevenly distributed (banded) in the layer and enriched at an interface, or in the vicinity thereof, opposite to another interface with the monomer-absorptive layer.

The gas barrier articles each have a polymer layer containing a gas barrier material that is unevenly distributed in the layer and enriched at an interface, or in the vicinity thereof, opposite to another interface with the monomer-absorptive layer, i.e., a polymer layer containing the gas barrier material that is distributed in a layer form. The gas barrier articles thereby exert satisfactory gas barrier properties, because a gas which is to diffuse and permeate through the articles is blocked by the structure where the gas barrier material is laminarly distributed, whereby the diffusion and permeation in the gas barrier articles is impeded.

Herein comparisons are made between a polymer layer containing an unevenly distributed gas barrier material and a polymer layer containing a gas barrier material being spread (polymer layer containing the gas barrier material spread in a thickness direction), in which the two polymer layers are in common with each other in the layer thickness, type and amount of the gas barrier material, and the monomer components of the polymer. As a result, the polymer layer containing the unevenly distributed gas barrier material having the above configuration exerts more satisfactory gas barrier properties than those of the polymer layer containing the spread gas barrier material. Independently, comparisons are made between a polymer layer containing a unevenly distributed gas barrier material and a polymer layer containing a gas barrier material being spread, which layers are in common with each other in the layer thickness, the type of the gas barrier material, and the monomer components of the polymer. In this case, the polymer layer containing the unevenly distributed gas barrier material exerts gas barrier properties at such a small content of the gas barrier material that the polymer layer containing the spread gas barrier material does not develop properties of inhibiting gas permeation.

The thickness of the portion enriched with the gas barrier material in the polymer layer containing the unevenly distributed gas barrier material can be controlled by modifying the amount of the gas barrier material. Accordingly, the gas transmission rate of the gas barrier article can be controlled by modifying the amount of the gas barrier material. As used herein the "portion enriched with the gas barrier material" refers to a portion where the gas barrier material is enriched and present, i.e., the laminarly distributed portion; and the "thickness" of the portion refers to a height of the portion in a thickness direction from the interface opposite to the monomer-absorptive layer.

Though not limited, exemplary gases against which the gas barrier articles according to embodiments of the present invention exert satisfactory gas barrier properties include water vapor, oxygen gas, carbon dioxide gas, nitrogen gas, air, and fragrant gases. The gas barrier articles are useful especially against, for example, water vapor and oxygen gas.

According to an embodiment, such a gas barrier article can be produced by providing a polymerizable composition layer containing a gas barrier material on at least one side of a monomer-absorptive layer using a polymerizable composition containing at least the gas barrier material and a polymerizable monomer; whereby allowing the gas barrier material to migrate within the polymerizable composition layer containing the gas barrier material, to give a polymerizable composition layer containing the gas barrier material that is unevenly distributed in the layer and enriched at an interface, or in the vicinity thereof, opposite to another interface with the monomer-absorptive layer (layer surface or in the vicinity thereof); and carrying out polymerization of the polymerizable composition layer containing the unevenly distributed gas barrier material to form a polymer layer containing the gas barrier material unevenly distributed, to thereby yield a multilayer structure including the monomer-absorptive layer and the polymer layer containing the unevenly distributed gas barrier material.

According to another embodiment, the gas barrier article can be produced by preparing a laminate including a monomer-absorptive sheet having a monomer-absorptive layer with a monomer-absorptive face, a polymerizable composition layer containing a gas barrier material and being present on the monomer-absorptive face of the monomer-absorptive sheet (the surface of a monomer-absorptive layer of the monomer-absorptive sheet), and a cover film present on the polymerizable composition layer, in which the polymerizable composition layer is formed from a polymerizable composition containing at least a polymerizable monomer and the gas barrier material, and the monomer-absorptive sheet is capable of absorbing the polymerizable monomer; allowing the gas barrier material to migrate within the polymerizable composition layer containing the gas barrier material, to give a polymerizable composition layer containing the gas barrier material, in which the gas barrier material is unevenly distributed in the layer and enriched in the layer surface adjacent to the cover film, or the vicinity of the layer surface (at an interface, or in the vicinity thereof, opposite to another interface with the monomer-absorptive layer); and thereafter carrying out polymerization of the polymerizable composition layer containing the unevenly distributed gas barrier material typically through photoirradiation or heating, to form a polymer layer containing the gas barrier material, in which the gas barrier material is unevenly distributed in the layer and enriched in the layer surface adjacent to the cover film, or the vicinity of the layer surface (at an interface, or in the vicinity thereof, opposite to another interface with the monomer-absorptive layer) to thereby yield an article having a multilayer structure including the monomer-absorptive layer and the polymer layer containing the unevenly distributed gas barrier material.

Accordingly, a gas barrier article, according to another embodiment, may be produced typically through the steps of (i) preparing a specific laminate; and thereafter (ii) irradiating the specific laminate with light.

The specific laminate may be prepared, for example, by applying a polymerizable composition containing a gas barrier material and being photopolymerizable (hereinafter also referred to as a "photopolymerizable composition containing the gas barrier material") to a cover film having a releasably treated surface on at least one side thereof, in which the composition is applied to the releasably treated surface, to form a photopolymerizable composition layer containing the gas barrier material thereon to give an assembly; and affixing the assembly to a monomer-absorptive sheet having a monomer-absorptive layer so that the monomer-absorptive layer is in contact with the photopolymerizable composition layer containing the gas barrier material.

Conditions for the polymerization of the polymerizable composition layer containing the unevenly distributed gas barrier material are not especially limited, as long as the polymerizable composition layer containing the unevenly distributed gas barrier material is polymerized/cured to give a polymer layer containing the gas barrier material unevenly distributed. Exemplary conditions herein include type of light source or heat source; irradiation energy or heat energy; irradiation procedure or heating procedure; irradiation duration or heating duration; starting timing of irradiation or heating; and ending timing of irradiation or heating.

Exemplary photoirradiation procedures include irradiation with ultraviolet rays typically using a black-light lamp, chemical lamp, high-pressure mercury lamp, or metal halide lamp. Exemplary heating procedures include known heating procedures such as heating with an electric heater or heating using electromagnetic waves such as infrared rays.

Typically, a gas barrier article according to an embodiment of the present invention may be produced by photoirradiating the specific laminate containing a polymerizable monomer with active energy rays such as ultraviolet rays. The specific laminate herein is a specific laminate which includes a releasable cover film, a photopolymerizable composition layer containing a gas barrier material, and a monomer-absorptive sheet, in which the photopolymerizable composition layer containing the gas barrier material is provided on the monomer-absorptive face of the monomer-absorptive sheet and is protected on its surface by the releasable cover film.

The absorption of the polymerizable monomer by the monomer-absorptive layer occurs at the time when the polymerizable composition layer containing the gas barrier material is formed or provided on the monomer-absorptive face. The absorption may occur during a duration from the formation of the polymerizable composition layer containing the gas barrier material to the polymerization of the layer (e.g., during a duration from the preparation of the specific laminate to the photoirradiation of the specific laminate); and/or may occur during a duration of the polymerization of the photopolymerizable composition layer containing the gas barrier material (e.g., during a duration of curing of the photopolymerizable composition layer containing the gas barrier material through photoirradiation).

Accordingly, the longer the time period from the contact of the polymerizable composition layer containing the gas barrier material with the monomer-absorptive layer to the completion of the polymerization is, the better. In particular, when the start of polymerization can be easily controlled by the timing of photoirradiation, the photoirradiation is performed after a lapse of preferably 1 second or longer, more preferably 5 seconds or longer, and furthermore preferably 10 seconds or longer (generally within 24 hours) from the contact.

In the gas barrier article, the gas barrier material is enriched in the surface or the vicinity thereof (at an interface, or in the vicinity thereof, opposite to another interface with the monomer-absorptive layer) in the polymer layer containing the unevenly distributed gas barrier material. Specifically, the gas barrier material is distributed and enriched in a region ranging from the surface (the interface opposite to the other interface with the monomer-absorptive layer) or layer surface (the interface opposite to the other interface with the monomer-absorptive layer) and occupying, in a thickness direction, 50% or less (preferably occupying 20% or less, and more preferably occupying 5% or less) of the total thickness. In other words, proportion of the portion enriched with the gas barrier material occupying in the multilayer structure (total thickness) including the monomer-absorptive layer and the polymer layer containing the unevenly distributed gas barrier material in the gas barrier article is 50% or less, preferably 20%, and more preferably 5% or less (this proportion is hereinafter also referred to as "occupancy"). This is probably because, when the polymerizable composition layer containing the gas barrier material for the formation of the polymer layer containing the gas barrier material unevenly distributed is provided so as to be in contact with the monomer-absorptive layer, at least one of monomer component (s) contained in the polymerizable composition layer containing the gas barrier material is absorbed by the monomer-absorptive layer, and this allows the gas barrier material to migrate within the photopolymerizable composition layer containing the gas barrier material.

If the occupancy is more than 50%, the gas barrier article may suffer from problems in strength and handleability. Above all, the handleability problems may significantly occur when the gas barrier article is in the form of a tape or sheet.

The thickness of the portion where the gas barrier material is enriched (portion enriched with the gas barrier material or portion where the gas barrier material is banded) in the polymer layer containing the unevenly distributed gas barrier material can be controlled by modifying the amount of the gas barrier material to be contained in the polymer layer. Accordingly, the gas transmission rate of the gas barrier article can be controlled by modifying the amount of the gas barrier material. As used herein the "thickness" of the portion refers to a height of the inner region enriched with the gas barrier material in a thickness direction from the layer surface, with respect to the total thickness in a thickness direction from the layer surface; or refers to a height of the inner region enriched with the gas barrier material in a thickness direction from the interface opposite to the monomer-absorptive layer, with respect to the total thickness in a thickness direction from the interface opposite to the monomer-absorptive layer.

Though not critical, the thicknesses of the gas barrier articles are generally from 10 to 2000 $\mu$m, preferably from 20 to 1000 $\mu$m, and more preferably from 30 to 500 $\mu$m, from the viewpoints typically of handleability and cost.

Though not critical, the total thickness of the monomer-absorptive layer and the polymer layer containing the unevenly distributed gas barrier material in the gas barrier article (the thickness of the multilayer structure including the monomer-absorptive layer and the polymer layer containing the unevenly distributed gas barrier material; hereinafter also referred to as "overall thickness") is generally from 10 to 2000 $\mu$m, preferably from 20 to 1000 $\mu$m, and more preferably from 30 to 500 $\mu$m. A gas barrier article, if having an overall thickness of less than 10 $\mu$m, may become difficult to be controlled in its thickness and/or may have poor handleability. This handleability problem may occur particularly when the gas barrier article is in the form of a tape or sheet.

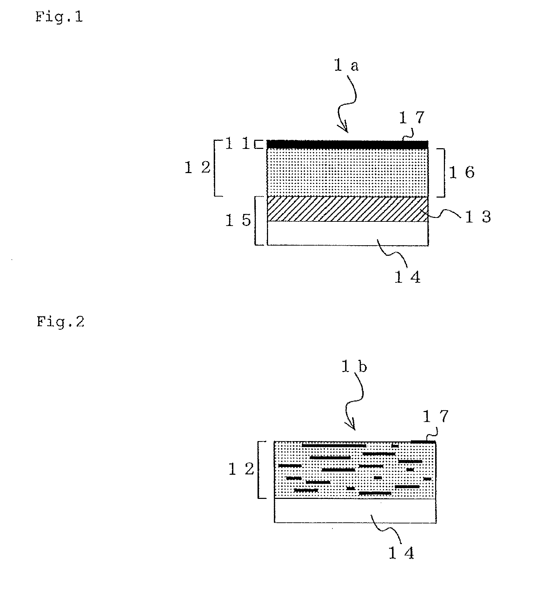

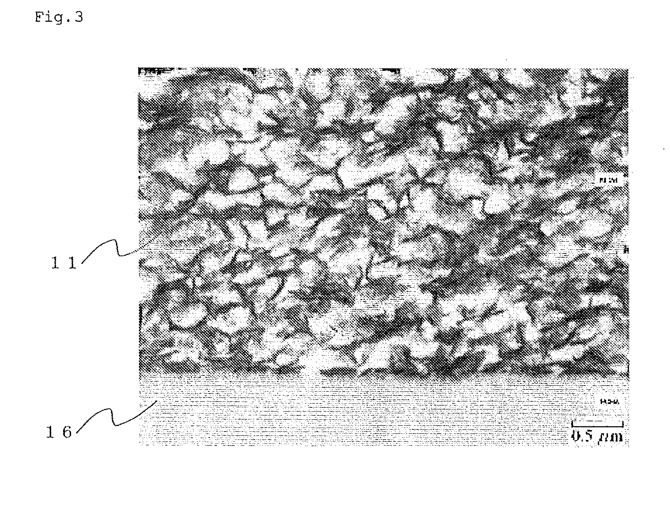

In the portion where the gas barrier material is distributed and enriched in the polymer layer containing the unevenly distributed gas barrier material in the gas barrier articles, the gas barrier material is coexistent with the polymer component(s) of the polymer layer. Such a portion where the gas barrier material is distributed and enriched (portion enriched with the gas barrier material) can be distinguished from a portion where the gas barrier material is not distributed (hereinafter also referred to as a "portion where the gas barrier material is sparse") in the polymer layer containing the unevenly distributed gas barrier material in the gas barrier article, because the portion enriched with the gas barrier material is present in the form of a layer (Fig. 1 and Fig. 3).

The gas barrier material may be present in a trace amount in the portion where the gas barrier material is sparse in some combinations of the monomer-absorptive layer and polymerizable monomer to be used in the gas barrier article. However, the gas barrier material present in a trace amount in the portion where the gas barrier material is sparse does not affect the gas barrier properties of the gas barrier articles. This is because the gas barrier articles exert the gas barrier properties due to the gas barrier material being present and enriched densely in the portion enriched with the gas barrier material in the polymer layer containing the unevenly distributed gas barrier material.

The proportion of the portion where the gas barrier material is sparse in the polymer layer containing the unevenly distributed gas barrier material of the gas barrier article is 80% or more, preferably 85% or more, and more preferably 90% or more. This proportion is hereinafter also referred to as "segregation percentage". If the segregation percentage is less than 80%, the gas barrier properties may be exerted insufficiently, because the laminarly distributed structure of the gas barrier material, which works to inhibit gas permeation, may not exist as a dense structure.

Though not critical, the apparent thickness of the portion enriched with the gas barrier material in the polymer layer containing the unevenly distributed gas barrier material is preferably such a thickness as to allow the gas barrier article to have an occupancy within the above-mentioned range. Specifically, the apparent thickness may be from 0.1 to 200 $\mu$m, preferably from 0.5 to 100 $\mu$m, and more preferably from 1 to 50 $\mu$m.

A gas barrier article according to an embodiment of the present invention can have a desired gas transmission rate as controlled, according to a gas whose permeation is to be inhibited, by regulating conditions and parameters such as the type, shape (form), size, content, and other parameters of the gas barrier material; the formulation of the monomer-absorptive layer, the formulation of polymer components constituting the polymer layer containing the unevenly distributed gas barrier material, and other formulations; and the thickness (overall thickness) of the monomer-absorptive layer and the polymer layer containing the unevenly distributed gas barrier material in the gas barrier article.

The gas barrier articles according to embodiments of the present invention are usable, for example, in packaging materials and storage bags in various applications such as foodstuffs, cosmetics, pharmaceuticals, sanitation-related articles, precision parts, and electronic parts.

The gas barrier material is present and enriched at an interface, or in the vicinity thereof, opposite to another interface with the monomer-absorptive layer in the polymer layer containing the unevenly distributed gas barrier material. The interface or the vicinity thereof (surface or the vicinity thereof) can exert characteristic properties derived from the polymer component of the polymer layer containing the unevenly distributed gas barrier material; characteristic properties which the gas barrier material inherently has; and characteristic properties derived from the uneven distribution (enrichment) of the gas barrier material in the polymer layer. This is because the gas barrier material is coexistent with the polymer component constituting the polymer layer containing the unevenly distributed gas barrier material in the portion enriched with the gas barrier material in the polymer layer containing the unevenly distributed gas barrier material.

Exemplary characteristic properties derived from the polymer component of the polymer layer containing the unevenly distributed gas barrier material include self-adhesiveness (tacky adhesiveness) when a pressure-sensitive adhesive component is used as the polymer component. Exemplary characteristic properties which the gas barrier material inherently has include hydrophilicity and thermal stability, in addition to gas barrier properties. Exemplary characteristic properties derived from the uneven distribution (enrichment) of the gas barrier material in the polymer layer include controlling of self-adhesiveness (pressure-sensitive adhesiveness) by modifying the content of the gas barrier material when a pressure-sensitive adhesive component is used as the polymer component; graphical design function typically through coloring; impartment of surface roughness, and characteristic properties derived from the surface roughness (e.g., removability, anti-blocking properties, antiglare properties, graphical design function, and light scattering properties) when particles are used as the gas barrier material.

As has been described, according to an embodiment of the present invention, a gas barrier article having a polymer layer containing a gas barrier material unevenly distributed can be produced, even though using a polymerizable composition containing the gas barrier material, without the need of evaporating and removing volatile components (e.g., solvents and organic compounds).

In addition, the monomer-absorptive layer is not particularly limited, as long as being capable of absorbing at least one of polymerizable components used in the polymerizable composition containing the gas barrier material. The elastic modulus of the monomer-absorptive layer is thereby not critical herein. Specifically, a sheet of any elastic modulus can be used, as long as being capable of absorbing at least one of polymerizable monomers used in the polymerizable composition containing the gas barrier material. A gas barrier article can therefore be produced according to the present invention using a sheet (monomer-absorptive layer) without being restricted by the elastic modulus of the sheet. Examples of such sheets having various elastic moduli include those having low elastic moduli, such as pressure-sensitive adhesive layer and polymer layer; and those having high elastic moduli, such as plastic sheet, hard coat layer, and colored coat layer.

In an embodiment of the present invention, a monomer-absorptive polymer layer including a polymer is used as the monomer-absorptive layer. In this embodiment, a gas barrier article can be produced regardless of whether the monomer-absorptive polymer layer has been crosslinked to a gel fraction of about 98% or has been crosslinked to little degree (to a gel fraction of 10% or less). This is because the gel fraction of the monomer-absorptive polymer layer including a polymer is not critical herein, as long as the layer is capable of absorbing at least one of polymerizable monomers used in the polymerizable composition containing the gas barrier material.

Furthermore, according to the present invention, gas barrier articles can be produced regardless of whether the monomer-absorptive layer is a hard (rigid) layer or soft (flexible) layer.

EXAMPLES

The present invention will be illustrated in further detail with reference to several working examples below. It should be noted, however, these examples are never construed to limit the scope of the present invention.

(Preparation Example 1 of Photopolymerizable Syrup)

In a four-necked flask equipped with a stirrer, a thermometer, a nitrogen gas inlet tube, and a condenser were stirred 100 parts by weight of cyclohexyl acrylate as a monomer component, 0.1 part by weight of a photoinitiator (trade name "IRGACURE 651" supplied by Ciba Specialty Chemicals Corporation), and 0.1 part by weight of another photoinitiator (trade name "IRGACURE 184" supplied by Ciba Specialty Chemicals Corporation) to give a homogeneous mixture. The mixture was thereafter subjected to bubbling with nitrogen gas for 1 hour to remove dissolved oxygen therefrom. Thereafter the mixture was polymerized through irradiation with ultraviolet rays from the outside of the flask using a black-light lamp, and at the time when the mixture had a suitable viscosity, the lamp was turned out and the nitrogen bubbling was stopped to yield a composition (syrup) having a degree of polymerization of 7% and having been partially polymeri-zed (hereinafter also referred to as a "photopolymerizable syrup (A)").

(Preparation Example 2 of Photopolymerizable Syrup)

In a four-necked flask equipped with a stirrer, a thermometer, a nitrogen gas inlet tube, and a condenser were stirred 100 parts by weight of butyl acrylate as a monomer component, 0.1 part by weight of a photoinitiator (trade name "IRGACURE 651" supplied by Ciba Specialty Chemicals Corporation), and 0.1 part by weight of another photoinitiator (trade name "IRGACURE 184" supplied by Ciba Specialty Chemicals Corporation) to give a homogeneous mixture. Bubbling with nitrogen gas was then performed for 1 hour to remove dissolved oxygen. Thereafter ultraviolet rays emitted from a black-light lamp were applied to the mixture from the outside of the flask, and at the time when the viscosity of the mixture became a suitable viscosity, the lamp was turned out and the nitrogen bubbling was stopped to yield a composition (syrup) having a degree of polymerization of 7% and having been partially polymerized (hereinafter also referred to as a "photopolymerizable syrup (B)").

(Preparation Example 1 of Polymerizable Composition Containing Gas Barrier Material)

A monomer mixture (cloudy) added with a layered clay mineral was prepared by adding 10 parts by weight of a layered clay mineral (trade name "LUCENTITE SPN" supplied by CO-OP CHEMICAL CO., LTD., plate-like form) to a monomer mixture and leaving the resulting mixture at room temperature (25°C) for 24 hours. The monomer mixture contained 90 parts by weight of butyl acrylate, 10 parts by weight of acrylic acid, 0.4 part by weight of 1,6-hexanediol diacrylate, 0.4 part by weight of a photoinitiator (trade name "IRGACURE 651" supplied by Ciba Specialty Chemicals Corporation), and 0.4 part by weight of another photoinitiator (trade name "IRGACURE 184" supplied by Ciba Specialty Chemicals Corporation).
Next, the monomer mixture containing the layered clay mineral was irradiated with ultrasound at an irradiation intensity of 500 mW for 3 minutes using an ultrasonic disperser (supplied by Nihon Seiki Seisakusho Co., Lid.).
The ultrasonic treatment allowed the monomer mixture containing the layered clay mineral to be transparent.
The monomer mixture containing the layered clay mineral after the ultrasonic treatment was combined with 70 parts by weight of the photopolymerizable syrup (B), the resulting mixture was stirred at 1000 rpm for 5 minutes using a compact disperser (trade name "T.K. ROBOMIX" supplied by PRIMIX Corporation), and thereby yielded a polymerizable composition containing a gas barrier material (hereinafter also referred to as a "polymerizable composition (A) containing a gas barrier material").

(Cover Film)

A cover film used herein was a biaxially oriented poly(ethylene terephthalate) film (trade name "MRN38" supplied by Mitsubishi Polyester Film GmbH (Mitsubishi Plastics, Inc.)) having a thickness of 38 $\mu$m, one surface of which had been treated with a silicone release agent.

(Base Film)

A base film used herein was a biaxially oriented poly(ethylene terephthalate) film (trade name "MRF38" supplied by Mitsubishi Polyester Film GmbH (Mitsubishi Plastics, Inc.)) having a thickness of 38 $\mu$m, one surface of which had been treated with a silicone release agent.

(Preparation Example 1 of Supported Monomer-Absorptive Sheet)

Initially, a photopolymerizable syrup composition (hereinafter also referred to as a "photopolymerizable syrup composition (A)") was prepared by homogeneously mixing 100 parts by weight of the photopolymerizable syrup (A) with 0.1 part by weight of 1,6-hexanediol diacrylate. The photopolymerizable syrup composition was applied to the releasably treated surface of the base film to form a photopolymerizable syrup composition layer so as to have a thickness after curing of 100 $\mu$m. The cover film was applied to the layer so that the layer was in contact with the releasably treated surface of the cover film; and the both sides of the resulting article were irradiated simultaneously with ultraviolet rays (illuminance: 5 mW/cm$^2$) using a black-light lamp for 5 minutes to cure the layer to thereby form a monomer-absorptive layer. Thus, a supported monomer-absorptive sheet where the surface of the monomer-absorptive layer was protected by the cover film was prepared (this sheet is hereinafter also referred to as a "supported monomer-absorptive sheet (A)").

(EXAMPLE 1)

The polymerizable composition (A) containing the gas barrier material was applied to the releasably treated surface of the cover film so that the total thickness of the monomer-absorptive layer and a photo-polymerized/cured layer containing the gas barrier material be 140 $\mu$m, and thereby yielded a sheet including the cover film and a polymerizable composition layer being present on the cover film and containing the gas barrier material.
The cover film of the supported monomer-absorptive sheet (A) was removed to expose the monomer-absorptive layer; and the exposed monomer-absorptive layer was affixed to the sheet including the cover film and the polymerizable composition layer being present on the cover film and containing the gas barrier material, so that the monomer-absorptive layer was in contact with the polymerizable composition layer containing the gas barrier material to thereby form a laminate.
One minute after the formation of the laminate, the both sides of the laminate were irradiated simultaneously with ultraviolet rays (illuminance: 5 mW/cm$^2$) from a black-light lamp as a light source for 5 minutes to photocure the polymerizable composition layer containing the gas barrier material to thereby form a photo-polymerized/cured layer containing the gas barrier material (photo-polymerized/cured layer containing the gas barrier material or layer containing the gas barrier material and having been cured at room temperature). Thus, an article (member) was formed.

The article had an overall thickness of the monomer-absorptive layer and the photo-polymerized/cured layer containing the gas barrier material of 141 $\mu$m and had an apparent thickness of the photo-polymerized/cured layer containing the gas barrier material of 43 $\mu$m.

(COMPARATIVE EXAMPLE 1)

An article was prepared by the procedure of Example 1, except for using the base film instead of the supported monomer-absorptive sheet (A).

The article had a total thickness of the base film and the photo-polymerized/cured layer containing the gas barrier material of 140 $\mu$m.

(Evaluation 1)

The water vapor transmission rate of the articles according to the example and the comparative example was measured by the following "Method for Measuring Water Vapor Transmission Rate". The results are shown in "Water vapor transmission rate" in Table 1.

(Method for Measuring Water Vapor Transmission Rate)

The cover film and base film were removed from the articles to expose the surfaces of the photopolymerized/cured layer containing the gas barrier material and of the monomer-absorptive layer; and water vapor transmission rates were measured using a water vapor transmission rate test system (supplied by MOCON, Inc.) at a temperature of 40°C and relative humidity of 80%. The method for measuring water vapor transmission rate is in accordance with Japanese Industrial Standards (JIS) K 7129 or with the MOCON method.

(Evaluation 2)

The cross sections of the articles according to the example and comparative example were observed with a scanning electron microscope (SEM). Specifically, the cross sections of the articles were observed by freezing the articles at -100°C, preparing cryosections from the frozen articles, staining the cryosections with a 2% aqueous ruthenic acid solution for 3 minutes, and observing the stained cryosections at an acceleration voltage of 100 V. The scanning electron microscope used herein was "S3400-N" supplied by Hitachi High-Technologies Corporation.

The scanning electron microscopic observations of the cross sections of the articles according to the example and comparative example are shown in Fig. 1 and Fig. 2 (schematic cross-sectional views of the articles according to Example 1 and Comparative Example 1), respectively. The reference numerals "1a" stands for the cross section of the article according to Example 1; and "1b" stands for the cross section of the article according to Comparative Example 1. The scanning electron microscopic observations of the cross sections of the articles according to the example and comparative example demonstrate that, in the article according to Example 1, the gas barrier material is unevenly distributed in the layer and enriched in the layer surface or the vicinity thereof in the photopolymerized/cured layer containing the gas barrier material; and in contrast, in the article according to Comparative Example 1, the gas barrier material is not enriched in the layer surface or the vicinity thereof but is spread overall in the photo-polymerized/cured layer containing the gas barrier material.

Independently, the article according to Example 1 was frozen and cut at -100°C to give a sample section 80 nm thick, the sample section was stained with a 2% aqueous ruthenic acid solution for 3 minutes and was then observed with a scanning electron microscope (SEM) at an acceleration voltage of 100 V.

Fig. 2 depicts a scanning electron micrograph (SEM image) of part of the sample section of the article according to Example 1. The scanning electron micrograph shows also how the interface is present between a portion where the gas barrier material 11 is enriched and a portion where the gas barrier material 11 is sparse in the photopolymerized/cured layer containing the gas barrier material 12. The scanning electron micrograph was taken at magnifications of 50000 times.

(Evaluation 3)

The thickness (thickness A) of the photopolymerized/cured layer containing the gas barrier material, the thickness (thickness B) of the monomer-absorptive layer, and the thickness (thickness C) of the portion where the gas barrier material is enriched in the photo-polymerized/cured layer containing the gas barrier material (portion enriched with the gas barrier material or portion where the gas barrier material is banded) were determined by observing the cross section of each article with a scanning electron microscope (SEM) and measuring the thicknesses of the supported monomer-absorptive sheet and of each article with a 1/1000 dial gauge. These thicknesses thus determined are shown in "Thickness A", "Thickness B", and "Thickness C" in Table 1. The segregation percentage and occupancy of each article were determined according to "Method for Determining Segregation Percentage" and "Method for Determining Occupancy" mentioned below, and the measured data are shown in "Segregation Percentage" and "Occupancy" in Table 1, respectively.

The thickness (thickness B) of the monomer-absorptive layer was determined by measuring the thickness of the supported monomer-absorptive sheet (i.e., the total thickness of the base film, monomer-absorptive layer, and cover film) and subtracting the thicknesses of the base film and of the cover film from the total thickness of the supported monomer-absorptive sheet.

The thickness (thickness A+B, overall thickness) of the multilayer structure including the monomer-absorptive layer and the photo-polymerized/cured layer containing the gas barrier material was determined by measuring the thickness of the article (i.e., the total thickness of the supported monomer-absorptive sheet, photo-polymerized/cured layer containing the gas barrier material, and cover film); and subtracting the thickness of the base film of the supported monomer-absorptive sheet and the thickness of the cover film from the thickness of the article.

The thickness (thickness A) of the photopolymerized/cured layer containing the gas barrier material was determined by subtracting the thickness (thickness B) of the monomer-absorptive layer from the overall thickness (thickness A+B).

The thickness (thickness A) of the photopolymerized/cured layer containing the gas barrier material is not a measured value but a theoretical value.

The height (thickness; thickness C) of the portion where the gas barrier material is present and enriched (portion enriched with the gas barrier material, portion where the gas barrier material is banded) in the photopolymerized/cured layer containing the gas barrier material was determined based on the scanning electron microscopic observation of the cross section of the article, where the height (thickness C) is the height of the portion in a thickness direction from the surface of the photopolymerized/cured layer containing the gas barrier material.

The thickness of the portion enriched with the gas barrier material in the photo-polymerized/cured layer containing the gas barrier material is the average of measured thicknesses as measured based on the scanning electron microscopic observation of the cross sections of each article.

(Method for Determining Segregation Percentage)

The segregation percentage of the photopolymerized/cured layer containing the gas barrier material was determined by calculation according to the following equation:

$$\texttt{Segregation percentage (\%) = (1-C/A)} \times \texttt{100}$$

(Method for Determining Occupancy)

The occupancy was determined by calculation according to the following equation, in which the occupancy is the proportion in a depth direction (thickness direction) of the portion enriched with the gas barrier material with respect to the thickness (thickness A+B, overall thickness) of the multilayer structure including the monomer-absorptive layer and the photo-polymerized/cured layer containing the gas barrier material, and the portion ranges from the surface of the photo-polymerized/cured layer.

$$\texttt{Occupancy (\%) = C/(A+B)} \times \texttt{100}$$

[Table 1]

TABLE 1

| | Example 1 | Comparative Example 1 |
|---|---|---|
| Thickness A of photo-polymerized/cured layer containing gas barrier material [μm] | 43 | 140 |
| Thickness B of monomer-absorptive layer [μm] | 98 | 0 |

(continued)

|  | Example 1 | Comparative Example 1 |
|---|---|---|
| Thickness A+B (overall thickness) of laminate structure monomer-absorptive layer and photo-polymerized/cured layer containing gas barrier material [$\mu$m] | 141 | 140 |
| Thickness C of portion where gas barrier material is enriched in photopolymerized/cured layer containing gas barrier material [$\mu$m] | 4 | 0 |
| Segregation percentage [%] | 91 | 0 |
| Occupancy [%] | 3 | 100 |
| Water vapor transmission rate [g/m$^2$•day] | 55 | 450 |

Industrial Applicability

The gas barrier articles according to the present invention are usable typically as packaging materials and storage bags in various applications such as foodstuffs, cosmetics, pharmaceuticals, sanitation-related articles, precision parts, and electronic parts.

**Claims**

1.   A gas barrier article comprising a multilayer structure including a polymer layer; and a monomer-absorptive layer present on the polymer layer and capable of absorbing at least one of monomer component(s) constituting the polymer, wherein the polymer layer is a polymer layer containing a gas barrier material, the gas barrier material being unevenly distributed in the layer and enriched at an interface, or in the vicinity thereof, opposite to another interface with the monomer-absorptive layer.

2.   The gas barrier article according to claim 1, further comprising a cover film present on an opposite side of the polymer layer to the monomer-absorptive layer.

3.   The gas barrier article according to one of claims 1 and 2, wherein the vicinity of the interface opposite to the other interface with the monomer-absorptive layer is a region ranging from the interface opposite to the other interface with the monomer-absorptive layer and occupying, in a thickness direction, 50% or less of the total thickness of the monomer-absorptive layer and the polymer layer.

4.   The gas barrier article according to any one of claims 1 to 3, wherein the monomer-absorptive layer is a monomer-absorptive polymer layer comprising a polymer.

5.   The gas barrier article according to claim 4, wherein the polymer constituting the monomer-absorptive polymer layer comprises at least one monomer component in common with the polymer constituting the polymer layer containing the unevenly distributed gas barrier material.

6.   The gas barrier article according to any one of claims 1 to 5, wherein the gas barrier material is an inorganic material.

7.   The gas barrier article according to claim 6, wherein the inorganic material is at least one material selected from the group consisting of a layered clay mineral, a silica, and an aluminum oxide.

8.   The gas barrier article according to any one of claims 1 to 7, wherein the polymer constituting the polymer layer containing the unevenly distributed gas barrier material is an acrylic polymer.

9.   The gas barrier article according to any one of claims 1 to 8, which is in the form of a tape or sheet.

10.   The gas barrier article according to any one of claims 1 to 9, which is adopted to blocking water vapor and/or oxygen gas.

11. A process for producing a gas barrier article, the process comprising the steps of providing a polymerizable composition layer containing a gas barrier material on at least one side of the monomer-absorptive layer including a polymerizable composition containing at least the gas barrier material and a polymerizable monomer, the monomer-absorptive layer being capable of absorbing the polymerizable monomer; whereby allowing the gas barrier material to migrate within the polymerizable composition layer containing the gas barrier material to give a polymerizable composition layer containing the gas barrier material, in which the gas barrier material is unevenly distributed in the layer and enriched at an interface, or in the vicinity thereof, opposite to another interface with the monomer-absorptive layer; and carrying out polymerization of the polymerizable composition layer containing the unevenly distributed gas barrier material to form a polymer layer containing the gas barrier material being unevenly distributed in the layer and enriched at an interface, or in the vicinity thereof, opposite to another interface with the monomer-absorptive layer, to thereby yield a gas barrier article having a multilayer structure including the monomer-absorptive layer and the polymer layer containing the unevenly distributed gas barrier material.

12. A process for producing a gas barrier article, the process comprising the steps of preparing a laminate, the laminate including, in the following order, a monomer-absorptive sheet, a polymerizable composition layer containing a gas barrier material, and a cover film, the monomer-absorptive sheet having a monomer-absorptive layer with a monomer-absorptive face, the polymerizable composition layer being present on the monomer-absorptive face of the monomer-absorptive sheet and including a polymerizable composition containing at least a polymerizable monomer and the gas barrier material, and the monomer-absorptive sheet being capable of absorbing the polymerizable monomer; allowing the gas barrier material to migrate within the polymerizable composition layer containing the gas barrier material to give a polymerizable composition layer containing the gas barrier material, in which the gas barrier material is unevenly distributed in the layer and enriched at an interface, or in the vicinity thereof, opposite to another interface with the monomer-absorptive layer; and carrying out polymerization of the polymerizable composition layer containing the unevenly distributed gas barrier material to form a polymer layer containing the gas barrier material being unevenly distributed in the layer and enriched at an interface, or in the vicinity thereof, opposite to another interface with the monomer-absorptive layer, to thereby yield a gas barrier article having a multilayer structure including the monomer-absorptive layer and the polymer layer containing the unevenly distributed gas barrier material.

13. The process for producing a gas barrier article, according to claim 12, wherein the cover film has releasability.

14. The process for producing a gas barrier article, according to any one of claims 11 to 13, wherein the monomer-absorptive layer is a monomer-absorptive polymer layer comprising a polymer.

15. The process for producing a gas barrier article, according to claim 14, wherein the polymer constituting the monomer-absorptive polymer layer comprises at least one monomer component in common with the polymer constituting the polymer layer containing the unevenly distributed gas barrier material.

16. The process for producing a gas barrier article, according to any one of claims 11 to 15, wherein the polymerization of the polymerizable composition layer containing the gas barrier material is performed through photoirradiation.

17. The process for producing a gas barrier article, according to any one of claims 11 to 16, wherein the gas barrier material is an inorganic material.

18. The process for producing a gas barrier article, according to any one of claims 11 to 17, wherein an acrylic monomer is used as the polymerizable monomer.

19. The process for producing a gas barrier article, according to any one of claims 11 to 18, to produce a gas barrier article in the form of a tape or sheet.

Fig.1

1 a

1 7

1 1

1 2

1 6

1 5

1 3

1 4

Fig.2

1 b

1 7

1 2

1 4

Fig.3

11

16

## INTERNATIONAL SEARCH REPORT

| International application No. |
|---|
| PCT/JP2008/070834 |

### A. CLASSIFICATION OF SUBJECT MATTER
*B32B27/20*(2006.01)i

According to International Patent Classification (IPC) or to both national classification and IPC

### B. FIELDS SEARCHED

Minimum documentation searched (classification system followed by classification symbols)
*B32B1/00-43/00*(2006.01)i

Documentation searched other than minimum documentation to the extent that such documents are included in the fields searched
Jitsuyo Shinan Koho          1922-1996     Jitsuyo Shinan Toroku Koho    1996-2009
Kokai Jitsuyo Shinan Koho     1971-2009     Toroku Jitsuyo Shinan Koho    1994-2009

Electronic data base consulted during the international search (name of data base and, where practicable, search terms used)
WPI

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 11-320767 A (Mitsubishi Gas Chemical Co., Inc.), 24 November, 1999 (24.11.99), Claims<br>& EP 941836 A2          & JP 2000-037820 A<br>& JP 2000-062101 A       & JP 2000-202952 A<br>& US 2002/001686 A1 | 1-7,9,10<br>8<br>11-19 |
| Y | JP 2006-142494 A (Toppan Printing Co., Ltd.), 08 June, 2006 (08.06.06), Par. No. [0029]<br>(Family: none) | 8 |
| A | JP 2006-307209 A (Nitta Corp.), 09 November, 2006 (09.11.06), Claims<br>(Family: none) | 1-19 |

[X] Further documents are listed in the continuation of Box C.          [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 February, 2009 (23.02.09) | 10 March, 2009 (10.03.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

| | INTERNATIONAL SEARCH REPORT | International application No. |
|---|---|---|
| | | PCT/JP2008/070834 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-264047 A  (Nitto Denko Corp.),<br>29 September, 2005 (29.09.05),<br>Claims<br>(Family: none) | 1-19 |
| A | JP 2004-115734 A  (Nitto Denko Corp.),<br>15 April, 2004 (15.04.04),<br>Claims<br>(Family: none) | 1-19 |
| A | JP 2005-037738 A  (Nitto Denko Corp.),<br>10 February, 2005 (10.02.05),<br>Claims<br>(Family: none) | 1-19 |

Form PCT/ISA/210 (continuation of second sheet) (April 2007)

**EP 2 221 174 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06199493133 A
- JP 2000336303 A